# EUROPÄISCHE PATENTSCHRIFT

(11) **EP 4 328 427 B1**
(45) Veröffentlichungstag und Bekanntmachung des Hinweises auf die Patenterteilung: **18.06.2025**
(21) Anmeldenummer: 24152059.2
(22) Anmeldetag: 24.01.2019
(51) Int. Cl.: F01P 11/02, F01M 11/00

(54) **AUSGLEICHSBEHÄLTER FÜR KÜHLKREISLÄUFE MIT UNTERSCHIEDLICHEM TEMPERATURNIVEAU UND DRUCKADDITION**
COMPENSATION CONTAINER FOR COOLING CIRCUITS WITH DIFFERENT TEMPERATURE LEVELS AND PRESSURE ADDITION
RÉSERVOIR DE COMPENSATION POUR CIRCUITS DE RÉFRIGÉRATION À DIFFÉRENTS NIVEAUX DE TEMPÉRATURE ET ADDITION DE PRESSION

(30) Priorität: 01.02.2018 DE 102018102235
(43) Veröffentlichungstag der Anmeldung: 28.02.2024
(62) Teilanmeldung aus: 19153571.5
(73) Patentinhaber: MAN Truck & Bus SE, 80995 München (DE)
(72) Erfinder: Stadler, Ferdinand, 80995 München (DE); Spiegel, Martin, 80995 München (DE); Dengler, Lisa, 80995 München (DE); Meyerhofer, Leopold, 80995 München (DE)
(74) Vertreter: v. Bezold & Partner Patentanwälte - PartG mbB

(56) Entgegenhaltungen:
- WO-A2-03/042516
- DE-A1- 102012 024 372
- DE-A1- 102015 015 198
- DE-A1- 2 063 298
- US-A- 5 829 268
- US-A1- 2011 284 107

## Beschreibung

Die Erfindung betrifft einen Ausgleichsbehälter für Kühlmittel in einem Kühlsystem mit mindestens zwei Kühlkreisläufen, welche auf unterschiedlichen Temperaturniveaus betrieben werden. Insbesondere betrifft die Erfindung einen Ausgleichsbehälter, der mehrere durch Trennwände getrennte Kammern umfasst. Ferner betrifft die Erfindung ein Fahrzeug, vorzugsweise ein Nutzfahrzeug, und/oder eine stationäre Anlage mit einem derartigen Ausgleichsbehälter.

Ausgleichsbehälter für Kühlmittel der eingangs genannten Art erfüllen in geschlossenen Kühlkreisläufen mehrere Aufgaben. Neben der Entlüftung des Kühlkreislaufs dienen sie dazu, Volumenänderungen des im Kühlkreislauf zirkulierenden Kühlmittels, z. B. Wasser, Öl oder ein Wasser-Kühlwasser-Additiv Gemisch, zu kompensieren. Hierzu ist der über eine Vor- und Rücklaufleitung mit dem entsprechenden Kühlkreislauf verbundene Ausgleichsbehälter nicht vollständig mit Kühlflüssigkeit gefüllt, sondern besitzt ein Luftvolumen definierter Größe. Dehnt sich das Kühlmittelvolumen infolge einer Erwärmung des Systems aus, wird Kühlmittel in den Ausgleichsbehälter geleitet und dort zwischengelagert. Durch die im Ausgleichsbehälter integrierte Druckregulierung wird gerade bei Betriebszuständen mit hohen Kühlmitteltemperaturen ein übermäßiger Druckanstieg im geschlossenen Kühlkreislauf verhindert, was ohne eine derartige Regulierung aufgrund der begrenzten Bauteilfestigkeit zu einem Bersten des Kühlers oder der Schläuche führen würde. Um diese kühlmittelspeichernde bzw. druckregulierende Funktion auch bei maximaler Kühlmitteltemperatur zu erfüllen, sollte das Luftvolumen des Ausgleichsbehälters bzw. das mögliche Kühlmittelreservoir entsprechend groß ausgelegt werden.

Einer großen Auslegung des Luftvolumens des Ausgleichsbehälters steht jedoch das Bestreben gegenüber, das Luftvolumen des Ausgleichsbehälters möglichst schnell nach Inbetriebnahme des Kühlkreislaufs mit einem erhöhten Druck (beispielsweise 0,6 bis 0,9 bar Überdruck relativ zum Umgebungsdruck) zu beaufschlagen, um so an der Saugseite der Kühlmittelpumpe einen ausreichenden Druck zur Vermeidung von Kavitation zu erhalten. Das Auftreten von Kavitation würde den Wirkungsgrad der in den Kühlkreisläufen befindlichen Kühlmittelpumpe/n reduzieren und kann zudem zu Schäden an den Pumpenteilen führen (Kavitationsfraß). Um daher den erhöhten Systemdruck im Kühlsystem auch unter Teillast und bei niedrigen Außentemperaturen möglichst schnell aufzubauen, sollte die Größe des Luftvolumens des Ausgleichsbehälters entsprechend klein ausgelegt werden.

Dieses Optimierungsproblem bei der Konstruktion des Ausgleichsbehälters wird nochmals erschwert, falls im Kühlsystem mehrere Kühlkreisläufe auf unterschiedlichen Temperaturniveaus vorhanden sind. Beispielsweise ist es bei Hybridfahrzeugen üblich, einen Hochtemperaturkreislauf zur Kühlung des Verbrennungsmotors mit einem Temperaturniveau von über 90 °C im Normalbetrieb sowie einem Niedertemperaturkreislauf zur Kühlung des elektrischen Antriebssystems mit einem niedrigen Temperaturniveau zu verwenden. Um in diesen Fällen den vorhandenen Bauraum effektiv zu nutzen sowie die Befüllung der verschiedenen Kühlkreisläufe zu erleichtern, ist meist vorgesehen nur einen gemeinsamen Ausgleichsbehälter für mehrere der Kühlkreisläufe zu nutzen. Einerseits können dadurch Komponenten (Einfüllstutzen, Silikatdepot etc.) eingespart werden, andererseits ermöglicht eine luftseitige Verbindung zwischen den Kühlkreisläufen im Ausgleichsbehälter einen Druckausgleich zwischen den verschiedenen Systemen. Durch das schnelle Erhitzen des Hochtemperaturkreislaufs und den damit einhergehenden Druckanstieg wird durch die luftseitige Kopplung der Kreisläufe gleichzeitig auch im Niedertemperaturkreislauf ein schneller Druckanstieg erreicht. Ohne eine derartige Kopplung würde aufgrund der niedrigen Temperatur im Niedertemperaturkreislauf der Druckaufbau eine deutlich längere Zeit in Anspruch nehmen.

Nachteilig an der Verwendung eines gemeinsamen Ausgleichbehälters ist allerdings, dass dadurch auch eine Vermischung der unterschiedlich temperierten Kühlmittel erfolgen kann. Über die entsprechende Vorlaufleitung würde dann "zu warmes" Kühlmittel aus dem gemeinsamen Ausgleichsbehälter in einen Kühlkreislauf mit niedrigerem Temperaturniveau eingebracht, was dessen Funktionalität einschränken bzw. zu Schäden an den daran angeschlossenen Komponenten führen könnte. Folglich ist es im Fall eines gemeinsamen Ausgleichsbehälters für Kühlmittel in einem Kühlsystem mit mindestens zwei unterschiedlich temperierten Kühlkreisläufen wünschenswert einerseits einen möglichst schnellen Druckaufbau und Druckausgleich zwischen den verschiedenen Kühlkreisläufen zuzulassen, andererseits jedoch das Einbringen von "zu warmen" Kühlmittels in den Kühlkreislauf mit niedrigerem Temperaturniveau zu unterbinden.

Zur Lösung dieses Problems schlägt die Offenlegungsschrift DE 2 063 298 A1 einen Ausgleichsbehälter vor, dessen Innenraum durch eine Trennwand in zwei Kühlmittelaufnahmebereiche unterteilt ist, die jeweils einem Kühlkreislauf zugeordnet sind. Die Trennwand ist dabei jedoch nicht durchgängig ausgebildet, sondern weist eine luftseitige Verbindungsöffnung auf. Dadurch findet ein Druckausgleich zwischen den beiden Bereichen statt, ohne dass eine Vermischung der Kühlmittel der beiden angeschlossenen Kühlkreisläufe auftritt. Da die Kühlmittel der beiden Kreisläufe allerdings in keinerlei Verbindung zueinander stehen, wird sowohl das Befüllen als auch das Einbringen von Zusatzstoffen in die Kühlmittel erschwert, da alle Komponenten (Stutzen, Silikatdepot etc.) mehrfach ausgelegt werden müssen. Weiterhin nachteilig an dieser Ausführungsform ist, dass der Aufbau des Systemdrucks nur langsam erfolgt, da das komplette Luftvolumen im Ausgleichsbehälter komprimiert werden muss.

Aus der Offenlegungsschrift DE 10 2007 054 855 A1 ist eine Weiterentwicklung des eben genannten Ausgleichsbehälters bekannt, welche neben der luftseitigen Verbindung unterhalb der Behälterdecke eine weitere Ausgleichsöffnung in der Trennwand zum Austausch von Kühlmittel und Zusatzstoffen offenbart. Diese Ausgleichsöffnung ist dabei so klein ausgeführt, um einen Niveauausgleich der Wärmeübertragungsmittel sowie eine Diffusion von Zusatzstoffen zwischen den beiden Bereichen zuzulassen, dabei allerdings eine Wärmeübertragung zwischen den beiden Kühlkreisläufen möglichst verhindert wird. Allerdings muss auch bei diesem Ausgleichsbehälter das komplette Luftvolumen zum Druckaufbau komprimiert werden. Das Dokument DE102015015198 A1 stellt ein weiteres relevantes System dar.

Es ist daher Aufgabe der Erfindung einen im Vergleich zum Stand der Technik verbesserten Ausgleichsbehälter für Kühlmittel in einem Kühlsystem mit mindestens zwei Kühlkreisläufen, welche auf unterschiedlichen Temperaturniveaus betrieben, bereitzustellen. Insbesondere ist Aufgabe der Erfindung einen Ausgleichsbehälter bereitzustellen, der einen schnellen Kühlmitteldruckaufbau und einen unmittelbaren Druckausgleich zwischen den daran angeschlossenen Kühlkreisläufen ermöglicht. Zudem soll ein Austausch von Kühlmittel sowie die Verteilung von Zusatzstoffen zwischen den verschiedenen Kühlkreisläufen ermöglicht werden, wobei gleichzeitig der Wärmeübertrag möglichst gering gehalten werden soll.

Diese Aufgabe wird durch eine Vorrichtung mit den Merkmalen des unabhängigen Anspruchs gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß allgemeinen Gesichtspunkten der Erfindung wird ein Ausgleichsbehälter für Kühlmittel in einem Kühlsystem mit mindestens zwei Kühlkreisläufen bereitgestellt, wobei mindestens zwei der Kühlkreisläufe auf unterschiedlichen Temperaturniveaus betrieben werden und weitere an sich bekannte Komponenten, darunter Kühlmittelpumpen, Kühlmittelkühler, Wärmetauscher sowie Fluidleitungen umfassen können. Der Innenraum des Ausgleichsbehälters ist durch Trennwände in getrennte Kammern unterteilt, umfassend eine erste Kühlmittelkammer mit einem ersten Einlass und einen ersten Auslass zum Verbinden der ersten Kühlmittelkammer mit einem ersten Kühlkreislauf und eine zweite Kühlmittelkammer mit einem zweiten Einlass und einen zweiten Auslass zum Verbinden der zweiten Kühlmittelkammer mit einem zweiten Kühlkreislauf. Das Volumen der ersten und zweiten Kühlkammer kann sich dabei unterscheiden. Das Verbinden der Kühlmittelkammern mit den jeweiligen Kühlkreisläufen kann dabei vorzugsweise über Fluidleitungen, beispielsweise Rohr- und/oder Schlauchverbindungen, erfolgen, wodurch ein Austausch von Kühlmittel, Luft bzw. Luft-Kühlmittel-Gemisch, aber auch von während des Betriebs durch Verdampfungsprozesse entstehende Gase zwischen den Kühlkreisläufen und dem Ausgleichsbehälter ermöglicht wird. Als Kühlmittel kann jedes für den Wärmetransport geeignetes Medium verwendet werden, welches zumindest teilweise im flüssigen Zustand durch die Kühlkreisläufe und Kühlmittelkammern zirkuliert. Vorzugsweise handelt es sich bei dem Kühlmittel um Öl, Wasser oder um ein Wasser-Kühlwasser-Additiv-Gemisch.

Der Ausgleichsbehälter umfasst eine erste Durchlassöffnung, vorzugsweise in einer die erste und zweite Kühlmittelkammer trennenden Trennwand, besonders bevorzugt in deren unteren Bereich zur Ermöglichung eines Austauschs von Kühlmittel zwischen der ersten und zweiten Kühlmittelkammer. Ferner umfasst der Ausgleichsbehälter eine zweite Durchlassöffnung, vorzugsweise in einer die erste und zweite Kühlmittelkammer trennenden Trennwand, besonders bevorzugt in deren oberen Bereich, zur Ermöglichung eines Austauschs von Luft zwischen der ersten und zweiten Kühlmittelkammer. Die Begriffe "oben" und "unten" sowie Abwandlungen davon (z. B. "oberhalb" und "unterhalb") beziehen sich dabei auf die Orientierung bezüglich der Schwerkraftrichtung. Folglich kann somit die erste Durchlassöffnung in einem Bereich unterhalb des Kühlmittelfüllstands in der ersten und zweiten Kühlmittelkammer im Normalbetrieb angeordnet sein. Insbesondere in Bodennähe des Ausgleichsbehälters. Um im Schadfall ein Leerlaufen beider Kühlkreisläufe zu vermeiden, kann die erste Durchlassöffnung im unteren Bereich der Trennwand allerdings beabstandet zum Boden des Ausgleichsbehälters angeordnet sein. Auf vorteilhafte Weise verbleibt somit eine Mindestmenge Kühlmittel im intakten Kühlkreislauf. Die zweite Durchlassöffnung kann in einem Bereich oberhalb des Kühlmittelfüllstands in der ersten und zweiten Kühlmittelkammer im Normalbetrieb angeordnet sein. Insbesondere in Deckennähe des Ausgleichsbehälters. Durch ihre entsprechenden Positionen ermöglicht die erste Durchlassöffnung damit einen Fluss von Kühlmittel von der ersten zur zweiten Kühlmittelkammer und umgekehrt und die zweite Durchlassöffnung ein Strömen von Luft von der ersten zur zweiten Kühlmittelkammer und umgekehrt, wobei der Begriff Luft hier stellvertretend für alle Arten von im Kühlkreis vorhandene Gase und/oder Dämpfe verstanden wird.

Die beiden Kühlmittelkammern können somit über die Durchlassöffnungen kommunizieren, wodurch eine Füllstandangleichung sowie ein unmittelbarer Druckausgleich in der ersten und zweiten Kühlmittelkammer ermöglicht wird. Zudem können auch weitere Durchlassöffnungen in der Trennwand vorhanden sein.

Neben den eben erwähnten Kühlmittelkammern umfasst der beanspruchte Ausgleichsbehälter weitere Luftkammern, darunter eine erste Luftkammer, die über eine erste Überströmverbindung mit der zweiten Kühlmittelkammer in Verbindung steht sowie eine zweite Luftkammer, die über eine zweite Überströmverbindung und ein daran angebrachtes erstes Druckventil mit der ersten Luftkammer in Verbindung steht. Bei der ersten und zweiten Überströmverbindung kann es sich um Fluidleitung, beispielsweise eine Rohr- und/oder Schlauchverbindung, handeln. Vorzugsweise verbindet die erste Überströmleitung dabei einen oberen Bereich der zweiten Kühlmittelkammer mit einem unteren Bereich der ersten Luftkammer und die zweite Überströmleitung einen oberen Bereich der ersten Luftkammer mit einem unteren Bereich der zweiten Luftkammer. Die Überströmleitungen können auch in Form eines durch eine Trennwand und einer weiteren Wandung geformten Kanals oder einer Durchgangsöffnung ausgeführt sein, wobei hierfür nötige Öffnungen in der Trennwand als Eintrittsöffnung der Überströmleitung und damit als Teil der Überströmleitung angesehen werden können.

Die zweite Luftkammer umfasst zudem ein zweites Druckventil, über das der Innenraum der zweiten Luftkammer mit dem Außenraum in Verbindung steht. Dabei ist dieses zweite Druckventil auf einen relativen Öffnungsdruck ausgelegt, der einer Druckdifferenz zwischen einem relativen Öffnungsdruck des ersten Druckventils und einem vorbestimmten erhöhten relativen Öffnungsdruck entspricht, sodass sich eine Druckaddition zwischen deren relativen Öffnungsdrücken ergibt. Soll beispielsweise in der ersten Luftkammer ein Überdruck von 0.9 bar relativ zum Außenraum nicht überschritten werden, so kann das erste Druckventil bei einem Überdruck von 0.4 bar in der ersten Luftkammer relativ zur zweiten Luftkammer öffnen und das zweite Druckventil bei einem Überdruck von 0.5 bar in der zweiten Luftkammer relativ zum Druck im Außenraum. Die Druckaddition kann somit auch als Reihenschaltung der beiden Druckventile verstanden werden, deren jeweiligen relativen Öffnungsdrücke sich durch die Hintereinanderschaltung aufsummieren. Bei den beiden Druckventilen kann es sich jeweils um ein Über- und/oder Unterdruckventil handeln, wobei für die Druckaddition nur die jeweiligen relativen Unter- bzw. Überöffnungsdrücke addiert werden. Wie später noch detailliert beschrieben wird, lässt sich durch diese Anordnung aus Luftkammern und Druckventilen auf vorteilhafte Weise erreichen, dass im Normalbetrieb ein schneller Druckaufbau im Ausgleichsbehälter erfolgen kann, während gleichzeitig auch bei maximaler Kühlmitteltemperatur ein genügend großes Volumen zur Aufnahme des expandierenden Kühlmittels bereitgestellt wird, wodurch ein Verlust bzw. Auswurf von Kühlmittel im Betrieb vermieden werden kann.

Die unbestimmten Artikel "ein", "eine" bzw. deren Deklinationen schließen eine Mehrzahl der damit bezeichneten Merkmale nicht aus. So sind sowohl die bisherigen als auch die folgenden Angaben mit "ein" bzw. "eine" als "mindestens ein" bzw. "mindestens eine" zu verstehen. Speziell umfasst der Ausgleichsbehälter damit mindestens einen ersten/zweiten Einlass, mindestens einen ersten/zweiten Auslass, mindestens eine erste/zweite Durchlassöffnung etc.

Gemäß einer Ausführungsform der Erfindung ist die erste Durchlassöffnung in einer unteren Hälfte, vorzugsweise in einem unteren Drittel, der die erste und zweite Kühlmittelkammer trennenden Trennwand und die zweite Durchlassöffnung in einer oberen Hälfte, vorzugsweise in einem oberen Drittel, der die erste und zweite Kühlmittelkammer trennenden Trennwand angeordnet. Dies soll sicherstellen, dass die erste Durchlassöffnung einen Austausch von Kühlmittel ermöglicht, welches sich schwerkraftbedingt in einem unteren Bereich der Kühlkammern sammelt und die zweite Durchlassöffnung einen Austausch von Luft ermöglicht, welche sich aufgrund der geringeren Dichte im oberen Bereich der Kühlkammern sammelt. Vorzugsweise ist die erste Durchlassöffnung im Bereich eines Auslasses und die zweite Durchlassöffnung im Bereich eines Einlasse einer der Kühlmittelkammern angebracht. Besonders bevorzugt befindet sich die erste Durchlassöffnung unterhalb des minimal zulässigen Füllstands im Normalbetrieb und die zweite Durchlassöffnung oberhalb des maximal zulässigen Füllstands im Normalbetrieb. Zudem kann die erste Durchlassöffnung im Vergleich zur Kühlmittelkammergröße so klein ausgeführt sein, dass zwar ein Niveauausgleich der Kühlmittel sowie Diffusion von Zusatzstoffen zwischen erster und zweiter Kühlmittelkammer stattfinden kann, allerdings keine größeren Mengen Wärme zwischen den beiden Kühlmittelkammern ausgetauscht werden. Vorzugsweise kann die erste Durchlassöffnung hierzu in einem strömungsberuhigten Bereich der ersten und zweiten Kühlmittelkammer angeordnet werden.

Um den Wärmeaustausch zwischen der ersten und zweiten Kühlmittelkammer weiter zu reduzieren, ist in einer bevorzugten Ausführungsform vorgesehen, dass die erste Durchlassöffnung zusätzlich eine Absperreinrichtung zur Unterbrechung des Austauschs von Kühlmittel zwischen der ersten und zweiten Kühlmittelkammer umfasst, wobei die Absperreinrichtung als Druckventil und/oder Schwimmerventil und/oder Thermostatventil und/oder Absperrschieber oder Absperrklappe ausgebildet ist. Dies hat den Vorteil, dass zum Zwecke der Befüllung und/oder eines Niveauausgleichs der Kühlmittel in den beiden Kühlmittelkammern ein Austausch von Kühlmittel ermöglicht wird, im Normalbetrieb die Wärmeübertragung jedoch nur über die Trennwand erfolgt. Diese kann dabei aufgrund ihres Materials, z. B. Kunststoff, oder konstruktiv bedingt eine geringe Wärmeleitfähigkeit besitzen, wodurch keine große Wärmeübertragung zwischen den unterschiedlich temperierten Kühlkreisläufen stattfinden kann. Die Absperreinrichtung in Form eines Druckventils kann dabei bei einer bestimmten Kühlmitteldruckdifferenz zwischen der ersten und zweiten Kühlkammer, z. B. aufgrund stark unterschiedlicher Füllstände, öffnen und somit einen Druckabbau bzw. Ausgleich der Füllstände ermöglichen. Die Absperreinrichtung in Form eines Schwimmerventils kann im Normalzustand geschlossen sein und nur öffnen, falls ein bestimmter Füllstand in der ersten und/oder der zweiten Kammer unterschritten oder überschritten wird. Wird der Sollfüllstand erreicht, kann das Schwimmerventil wieder schließen. Eine Absperreinrichtung in Form eines Thermostatventils kann dabei so ausgeführt sein, dass sich das Thermostatventil bei zunehmender Temperaturdifferenz der Medien in den Kühlmittelkammern schließt. Ferner kann ein manuell oder elektrisch betriebener Absperrschieber oder eine manuell oder eklektisch betriebene Absperrklappe vorgesehen sein. Diese Absperreinrichtungen können beispielsweise zur Befüllung geöffnet werden, ansonsten jedoch zur Vermeidung von Wärmeaustausch zwischen den Kammern geschlossen sein.

Ferner ist bevorzugt vorgesehen, dass die die erste und zweite Kühlmittelkammer trennende Trennwand in Form einer strömungsberuhigten dritten Kühlmittelkammer ausgebildet ist. Alternativ kann die dritte Kühlmittelkammer auch als weiteres Bauteil zusätzlich zur Trennwand ausgebildet sein. Der Austausch von Kühlmittel und Luft zwischen der ersten und zweiten Kühlmittelkammer erfolgt über die dritte Kühlmittelkammer, wobei aufgrund deren konstruktiver Gestaltung Konvektion effektiv vermieden oder zumindest reduziert werden kann. Mit anderen Worten können Kühlmittel und darin gelöste Zusatzstoffe nach dem Befüllen zwar von der ersten über die dritte zur zweiten Kühlmittelkammer gelangen und umgekehrt, allerdings findet dies vorzugsweise diffusiv und nicht in Form gerichteter Kühlmittel- und damit Wärmeströme statt. Der Austausch von Kühlmittel zwischen der ersten und zweiten Kühlmittelkammer "über die dritte Kühlmittelkammer" ist dabei so zu verstehen, dass Kühlmittel von der ersten Kühlmittelkammer zunächst in die dritte Kühlmittelkammer eintritt und anschließend in die zweite Kühlmittelkammer gelangt bzw. Kühlmittel von der zweiten Kühlmittelkammer zunächst in die dritte Kühlmittelkammer eintritt und anschließend in die erste Kühlmittelkammer gelangt.

Analoges gilt für den Austausch von Luft. Mit dem Ausbilden der die erste und zweite Kühlmittelkammer trennenden Trennwand als dritte Kühlmittelkammer, d. h. durch das Ausbilden einerseits einer die erste und dritte und andererseits einer die dritte und zweite Kühlmittelkammer trennenden Trennwand, geht ein entsprechendes Anpassen der ersten und zweiten Durchlassöffnung einher. Folglich umfasst sowohl die erste und dritte Kühlmittelkammer trennende Trennwand eine erste und zweite Durchlassöffnung als auch die, die dritte und zweite Kühlmittelkammer trennende, Trennwand eine erste und zweite Durchlassöffnung. Entsprechendes gilt auch, falls die dritte Kühlmittelkammer als weiteres Bauteil zusätzlich zur Trennwand ausgebildet ist.

Um das Hin- und Herströmen von Kühlmittel und damit einen Wärmeaustausch zwischen der ersten und zweiten Kühlmittelkammer effektiv zu unterbinden, sieht eine Weiterentwicklung der Ausführungsform vor, dass die dritte Kühlmittelkammer ein oder mehrere Schwallwände zur Strömungsberuhigung und/oder ein oder mehrere strömungsberuhigende Elemente umfasst. Die Schwallwand kann dabei einstückig mit der Wand des Ausgleichsbehälters und/oder einer Trennwand ausgebildet sein und/oder fluiddurchlässige Öffnungen aufweisen. Die Schwallwand kann Bewegungen des Kühlmittels innerhalb der dritten Kühlmittelkammer dämpfen und vorzugsweise die Steifigkeit des Ausgleichsbehälters und damit dessen Stabilität erhöhen. Derartige Schwallwände können zudem auch in den Kühlmittelkammern angeordnet sein. Die strömungsberuhigenden Elemente können in Form von Strömungshindernissen und/oder Einbauten und/oder Umströmungskörpern ausgeführt sein, die durch ihre Formgebung den Kühlmittelfluss einschränken oder dessen Geschwindigkeit reduzieren. Ferner umfasst die dritte Kühlmittelkammer ein oder mehrere Füllstandsonden. Dies ist besonders vorteilhaft, da aufgrund der beruhigten Strömung in dieser Kammer ein zuverlässiges Ab- und/oder Auslesen des Füllstands ohne große Schwankungen ermöglicht wird. Die Füllstandsonde kann dabei einen Schwimmer und/oder einen induktiven und/oder magnetostriktiven Sensor umfassen. Die Füllstandsonde kann einen Vibrationssensor und/oder einen Drucksensor umfassen. Ferner kann der Füllstandsonde eine optische Anzeige und/oder eine Ausgabe eines elektrischen Signals umfassen. Vorzugsweise ist die dritte Kühlmittelkammer an einer geometrisch zentralen Stelle des Ausgleichsbehälters angeordnet, um auch bei Schräglagen bzw. Beschleunigungen einen gemittelten Kühlmittelstand zu sensieren.

Gemäß eines weiteren Aspekts ist mindestens eine der Trennwände doppelwandig ausgebildet und umfasst einen thermisch isolierenden Luftspalt. Der Vorteil daran ist, dass dadurch der Wärmeübertrag zwischen den Kammern, vorzugsweise zwischen den Kühlmittelkammern, reduziert wird. Zudem kann der Luftspalt zwischen den beiden Wandungen zusätzlich mit weiterem wärmeisolierenden Material gefüllt sein.

Nach einer Ausführungsform umfasst die erste und/oder zweite Luftkammer einen Anschluss für eine externe Druckbeaufschlagung und/oder Druckentlastung. Mittels der in jeglicher technischer Form ausgeführten externen Druckbeaufschlagung kann bereits zum Zeitpunkt der Inbetriebnahme ein erhöhter Druck im Ausgleichsbehälter eingestellt werden, wodurch in den an den Ausgleichsbehälter anschließenden (Teil-)Kühlkreisläufen und den darin enthaltenen Komponenten und Pumpen Kavitation und/oder Aufkochen von Kühlmittel vermieden werden kann. Dies ist besonders vorteilhaft falls die angeschlossenen Kühlkreisläufe auch im Normalbetrieb niedrige Temperaturniveaus besitzen und damit ein regulärer Druckaufbau nur langsam erfolgen würde. Der Anschluss für eine externe Druckentlastung kann dabei beispielsweise mit einem Bereichs eines an den Ausgleichsbehälter angeschlossenen Kühlkreislaufes verbunden sein, in welchem ungewollt hohe Drücke auftreten. Die externe Druckentlastung kann auch zur Ableitung von Druckstößen bzw. Druckpulsationen, welche beispielsweise durch einen Wasserretarder erzeugt werden, genutzt werden. Die externe Druckbeaufschlagung kann alternativ auch an der ersten und/oder zweiten Kühlmittelkammer angeordnet sein.

Um ferner auch ein gefahrloses Öffnen des Ausgleichsbehälters während des Betriebs zu ermöglichen, ist eine externe Druckentlastung vorgesehen, mittels der, der im Normalbetrieb im Ausgleichsbehälter vorhandene, Überdruck schnell abgelassen werden kann. Die externe Druckentlastung kann in den Deckel und/oder in die Einfüllöffnung integriert sein und beispielsweise über ein manuell oder automatisch aktivierbares Ventil erfolgen. Ferner kann die externe Druckentlastung durch eine Druckentlastungsöffnung im Deckel und/oder in der Einfüllöffnung ausgeführt sein, wobei die Druckentlastungsöffnung erst beim Öffnen des Deckels freigegeben wird. Hierbei soll der Druck samt mitgeführten Kühlmittel gezielt abgeführt werden.

Gemäß einer Ausführungsform, die keine Variante der vorliegenden Erfindung ist, ist vorgesehen, dass eine Luftkammeranordnung, umfassend die erste und zweite Luftkammer, direkt an eine Kühlmittelkammeranordnung, umfassend die erste und zweite Kühlmittelkammer, angrenzt. Was bedeutet, dass die Luftkammeranordnung und Kühlmittelkammeranordnung in einem direkten mechanischen Kontakt zueinanderstehen können und damit als ein Bauteil aufgefasst werden können. Erfindungsgemäß ist jedoch die Luftkammeranordnung, umfassend die erste und zweite Luftkammer, beabstandet von der Kühlmittelkammeranordnung, umfassend die erste und zweite Kühlmittelkammer, als ein separater Behälterteil ausgeführt und steht über die erste Überströmverbindung mit der Kühlmittelkammeranordnung in Verbindung. Zu diesem Zweck kann die Überströmverbindung eine zusätzliche Fluidleitungsstrecke, beispielsweise eine Rohr- und/oder Schlauchverbindung, umfassen. Der Vorzug dieser Ausführungsform ist, dass durch das flexiblere Anordnen der Kammern der vorhandene Bauraum besser genutzt werden kann.

In einer weiteren bevorzugten Ausführungsform umfasst die erste Luftkammer zum schnellen Druckaufbau ein kleineres Volumen als die zweite Luftkammer. Aufgrund des geringen Luftvolumens kann so bereits eine leichte Expansion des Kühlmittels einen deutlichen Druckanstieg im Ausgleichsbehälter bewirken, wodurch auf vorteilhafte Weise bereits kurz nach Inbetriebnahme ein erhöhter Kühlmitteldruck in den Kühlkreisen erreicht wird. Vorzugsweise dient somit die erste Luftkammer in erster Linie zum Druckaufbau im Normalbetrieb, während das größere Volumen der zweiten Luftkammer so dimensioniert ist, um auch bei maximaler Kühlmitteltemperatur die komplette expandierende Kühlmittelmenge aufzunehmen und dadurch einen Auswurf bzw. Verlust von Kühlmittel vermieden wird. Darüber hinaus bewirkt das größere Volumen der zweiten Luftkammer ein möglichst gleichbleibendes Druckniveau bei schwankenden Kühlmitteltemperaturen im Betrieb.

Gemäß eines weiteren Aspekts der Erfindung ist der Ausgleichsbehälter aus einem transparenten Material gefertigt. Dies ermöglicht auf vorteilhafte Weise eine optische Kontrolle der Kühlmittelfüllstände in den einzelnen Kammern. Alternativ ist der Ausgleichsbehälter aus einem nicht transparenten Material gefertigt.

In einer weiteren Ausführung des Ausgleichsbehälters umfasst dieser auch ein Sichtfenster zur optischen Füllstandkontrolle. Vorzugsweise ist das Sichtfenster dabei an einer Kühlmittelkammer angeordnet. Der Ausgleichsbehälter kann auch mehrere Sichtfenster umfassen.

Ferner umfasst der Ausgleichsbehälter ein oder mehrere Füllstandsonden. Die Füllstandsonde kann dabei einen Schwimmer und/oder einen induktiven und/oder magnetostriktiven Sensor umfassen. Die Füllstandsonde kann einen Vibrationssensor und/oder einen Drucksensor umfassen. Ferner kann die Füllstandsonde eine optische Anzeige und/oder eine Ausgabe eines elektrischen Signals umfassen.

Um eine zuverlässige und stabile Schlauchverbindung zwischen den Kühlkreisen und den Kühlkammern sicherzustellen, ist in einer bevorzugten Ausführungsform vorgesehen, dass der Einlass und/oder Auslass der ersten und/oder zweiten Kühlmittelkammer als Schlauchstutzen oder Schlauchkupplung ausgeführt ist. Als Einlass wird dabei die Öffnung zur Zufuhr des Kühlmittels in die erste oder zweite Kühlmittelkammer, als Auslass die Öffnung zum Entweichen des Kühlmittels aus der ersten oder zweiten Kühlmittelkammer verstanden. Die erste und zweite Kühlmittelkammer kann zudem mehr als einen Einlass und mehr als einen Auslass umfassen. Alternativ kann der Ein- und/oder Auslass auch eine Rohrkupplung und/oder Flanschverbindung umfassen.

Zudem kann der Ausgleichsbehälter ein oder mehrere Silikatdepots zum Einbringen von Zusatzstoffen in das Kühlmittel umfassen. Vorzugsweise sind diese dabei an der ersten und/oder zweiten Kühlmittelkammer angeordnet. Bei den Silikatdepots kann es sich um permanente oder nachfüllbare Silikatdepots handeln, die im Kühlmittel lösbare Zusatzstoffe, z. B. korrosionshindernde Additive, über die Zeit an das Kühlmittel abgeben.

Ferner weist der Ausgleichsbehälter eine Einfüllöffnung für Kühlmittel mit einem entsprechenden Deckel auf. Die Einfüllöffnung ist dabei vorzugsweise im Bereich der die erste und zweite Kühlmittelkammer trennenden Trennwand angeordnet, um so ein einfaches Befüllen beider Kühlmittelkammern zu ermöglichen. Alternativ ist die Einfüllöffnung nur im Bereich der ersten oder zweiten Kühlkammer angeordnet und das Befüllen der anderen Kammern erfolgt über die erste Durchlassöffnung. Vorzugsweise kann die Einfüllöffnung im Bereich der Ausgleichsbehälterdecke angeordnet sein. Zusätzlich kann der Ausgleichsbehälter - falls für den Befüllprozess bei der Montage vorteilhaft - auch Füllöffnungen umfassen, über die bei der Montage eine Befüllung erfolgt, die anschließend jedoch nicht öffenbar verschlossen werden.

Um weitere Kühlkreisläufe anzuschließen, umfasst der Ausgleichsbehälter weitere zur ersten und zweiten Kühlmittelkammer parallel geschaltene Kühlmittelkammern mit entsprechenden Einlässen und Auslässen zum Verbinden mit weiteren Kühlkreisläufen. Die weiteren Kühlmittelkammern können dabei über entsprechende Durchlassöffnungen in den entsprechenden Trennwänden in Verbindung stehen und so einen Austausch von Kühlmittel und Luft zwischen der ersten, zweiten und den weiteren Kühlmittelkammern zu ermöglichen.

Ferner umfasst der Ausgleichsbehälter weitere zur ersten und zweiten Luftkammer in Reihe geschaltene Luftkammern mit entsprechenden Überströmverbindungen und Druckventilen. Vorzugsweise summieren sich durch die Reihenschaltung die jeweiligen relativen Öffnungsdrücke der Druckventile auf. Bei den beiden Druckventilen kann es sich jeweils um ein Über- und/oder Unterdruckventil handeln, wobei für die Druckaddition nur die jeweiligen relativen Unter- bzw. Überöffnungsdrücke addiert werden.

Die Erfindung betrifft ferner ein Kraftfahrzeug, vorzugsweise Nutzfahrzeug (z. B. Lastkraftwagen, Sattelzugmaschine, sonstiges KFZ, etc.), mit einem Ausgleichsbehälter, wie er in diesem Dokument beschrieben ist. Beispielsweise kann es sich bei den Nutzfahrzeug um eine Baumaschine (Bagger, Raupe, etc.) aber auch um eine Landwirtschaftsmaschine (Traktor, Mähdrescher, etc.) handeln. Das Kraftfahrzeug kann dabei einen Verbrennungsmotor und/oder Elektromotor und/oder eine Brennstoffzelle umfassen.

Des Weiteren betrifft die Erfindung eine stationäre Anlage mit einem Ausgleichsbehälter, wie er in diesem Dokument beschrieben ist. Die stationäre Anlage kann dabei ebenfalls einen Verbrennungsmotor und/oder Elektromotor und/oder eine Brennstoffzelle umfassen.

Die Offenbarung umfasst ferner die folgenden Aspekte:
Ein erster unabhängiger Aspekt betrifft einen Ausgleichsbehälter für Kühlmittel in einem Kühlsystem mit mindestens zwei Kühlkreisläufen, welche auf unterschiedlichen Temperaturniveaus betrieben werden, wobei ein Innenraum des Ausgleichsbehälters durch Trennwände in getrennte Kammern unterteilt ist. Der Ausgleichsbehälter umfasst:
a) eine erste Kühlmittelkammer, aufweisend einen ersten Einlass und einen ersten Auslass zum Verbinden der ersten Kühlmittelkammer mit einem ersten Kühlkreislauf,
b) eine zweite Kühlmittelkammer, aufweisend einen zweiten Einlass und einen zweiten Auslass zum Verbinden der zweiten Kühlmittelkammer mit einem zweiten Kühlkreislauf,
c) eine erste Durchlassöffnung in einer die erste und zweite Kühlmittelkammer trennenden Trennwand, vorzugsweise in deren unteren Bereich, zur Ermöglichung eines Austauschs von Kühlmittel zwischen der ersten und zweiten Kühlmittelkammer,
d) eine zweite Durchlassöffnung in einer die erste und zweite Kühlmittelkammer trennenden Trennwand, vorzugsweise in deren oberen Bereich, zur Ermöglichung eines Austauschs von Luft zwischen der ersten und zweiten Kühlmittelkammer,
e) eine erste Luftkammer, die über eine erste Überströmverbindung mit der zweiten Kühlmittelkammer in Verbindung steht,
f) eine zweite Luftkammer, die über eine zweite Überströmverbindung und ein daran angebrachtes erstes Druckventil mit der ersten Luftkammer in Verbindung steht und über ein zweites Druckventil mit dem Außenraum in Verbindung steht, wobei
g) das zweite Druckventil auf einen relativen Öffnungsdruck ausgelegt ist, der einer Druckdifferenz zwischen einem relativen Öffnungsdruck des ersten Druckventils und einem vorbestimmten erhöhten relativen Öffnungsdruck entspricht, so dass sich eine Druckaddition zwischen deren relativen Öffnungsdrücken ergibt.

Nach einem, vom ersten Aspekt abhängigen, zweiten Aspekt ist die erste Durchlassöffnung in einer unteren Hälfte, vorzugsweise in einem unteren Drittel, der die erste und zweite Kühlmittelkammer trennenden Trennwand und die zweite Durchlassöffnung in einer oberen Hälfe, vorzugsweise in einem oberen Drittel, der die erste und zweite Kühlmittelkammer trennenden Trennwand angeordnet.

Nach einem, vom ersten oder zweiten Aspekt abhängigen, dritten Aspekt umfasst die erste Durchlassöffnung zusätzlich eine Absperreinrichtung zur Unterbrechung des Austauschs von Kühlmittel zwischen der ersten und zweiten Kühlmittelkammer, wobei die Absperreinrichtung als
a. Druckventil und/oder
b. Schwimmerventil und/oder
c. Thermostatventil und/oder
d. Absperrschieber oder Absperrklappe
ausgebildet ist.

Nach einem, vom ersten Aspekt abhängigen, vierten Aspekt ist die die erste und zweite Kühlmittelkammer trennende Trennwand in Form einer strömungsberuhigten dritten Kühlmittelkammer ausgebildet, wobei der Austausch von Kühlmittel und Luft zwischen der ersten und zweiten Kühlmittelkammer über die dritte Kühlmittelkammer erfolgt.

Nach einem, vom vierten Aspekt abhängigen, fünften Aspekt umfasst die dritte Kühlmittelkammer
a. ein oder mehrere Schwallwände zur Strömungsberuhigung und/oder
b. ein oder mehrere strömungsberuhigende Elemente und/oder
c. ein oder mehrere Füllstandsonden.

Nach einem, von einem der Aspekte eins bis fünf abhängigen, sechsten Aspekt ist mindestens eine der Trennwände doppelwandig ausgebildet und umfasst einen thermisch isolierenden Luftspalt.

Nach einem, von einem der Aspekte eins bis sechs abhängigen, siebten Aspekt umfasst die erste und/oder zweite Luftkammer einen Anschluss für eine externe
a) Druckbeaufschlagung und/oder
b) Druckentlastung.

Nach einem, von einem der Aspekte eins bis sieben abhängigen, achten Aspekt
a) grenzt eine Luftkammeranordnung, umfassend die erste und zweite Luftkammer direkt an eine Kühlmittelkammeranordnung, umfassend die erste und zweite Kühlmittelkammer, an; oder
b) ist eine Luftkammeranordnung, umfassend die erste und zweite Luftkammer beabstandet von der Kühlmittelkammeranordnung, umfassend die erste und zweite Kühlmittelkammer, als ein separater Behälterteil ausgeführt und steht über die erste Überströmverbindung mit der Kühlmittelkammeranordnung in Verbindung.

Nach einem, von einem der Aspekte eins bis acht abhängigen, neunten Aspekt umfasst zum schnellen Druckaufbau die erste Luftkammer ein kleineres Volumen als die zweite Luftkammer.

Nach einem, von einem der Aspekte eins bis neun abhängigen, zehnten Aspekt
a1) ist der Ausgleichsbehälter aus einem transparenten Material gefertigt oder
a2) ist der Ausgleichsbehälter aus einem nicht transparenten Material gefertigt und/oder
b1) umfasst der Ausgleichsbehälter ein Sichtfenster zur optischen Füllstandskontrolle und/oder
b2) umfasst der Ausgleichsbehälter ein oder mehrere Füllstandsonden.

Nach einem, von einem der Aspekte eins bis zehn abhängigen, elften Aspekt
a) ist der Einlass und/oder Auslass der ersten und/oder zweiten Kühlmittelkammer als Schlauchstutzen oder Schlauchkupplung ausgeführt und/oder
b) umfasst der Ausgleichsbehälter ein oder mehrere Silikatdepots zum Einbringen von Zusatzstoffen in das Kühlmittel, welche vorzugsweise an der ersten und/oder zweiten Kühlmittelkammer angeordnet sind und/oder
c) weist der Ausgleichsbehälter eine Einfüllöffnung für Kühlmittel mit einem entsprechenden Deckel auf.

Nach einem, von einem der Aspekte eins bis elf abhängigen, zwölften Aspekt umfasst der Ausgleichsbehälter
a. weitere zur ersten und zweiten Luftkammer in Reihe geschaltete Luftkammern mit entsprechenden Überströmverbindungen und Druckventilen; und/oder
b. weitere zur ersten und zweiten Kühlmittelkammer parallel geschaltete Kühlmittelkammern mit entsprechenden Einlässen und Auslässen zum Verbinden mit weiteren Kühlkreisläufen.

Ein dreizehnter Aspekt betrifft ein Kraftfahrzeug, vorzugsweise Nutzfahrzeug, und/oder eine stationäre Anlage mit einem Ausgleichsbehälter nach einem der Aspekte eins bis zwölf.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügte Zeichnung beschrieben. Es zeigen:
- Figur 1:: ein schematischer Längsschnitt eines Ausgleichsbehälters für Kühlmittel in einem Kühlsystem mit mindestens zwei Kühlkreisläufen nach einer Ausführungsform (keine Ausführungsform der Erfindung);
- Figur 2:: eine Ausführungsform eines Ausgleichsbehälters gemäß eines Ausführungsbeispiels der Erfindung, bei der die Luftkammeranordnung, umfassend die erste und zweite Luftkammer, als ein separater Behälterteil ausgeführt;
- Figur 3:: eine Ausführungsform (keine Ausführungsform der Erfindung) eines Ausgleichsbehälters gemäß eines Ausführungsbeispiels, die eine weitere Kühlmittelkammer umfasst.

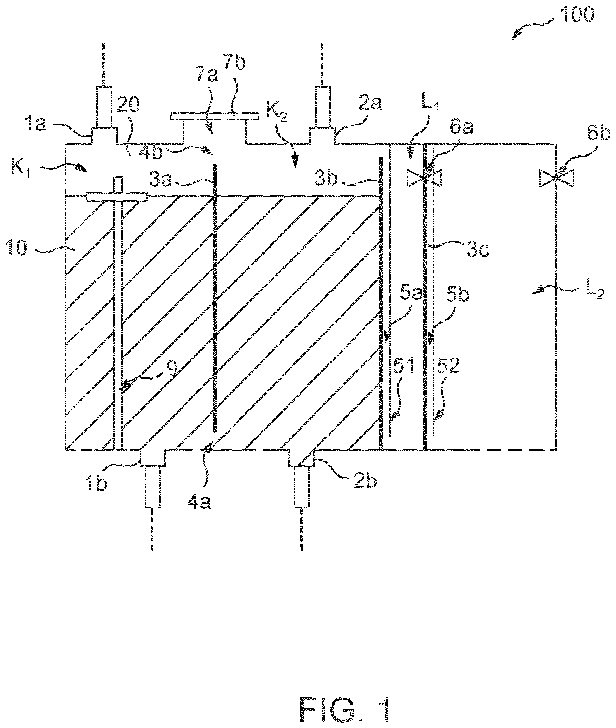

Figur 1 zeigt einen Ausgleichsbehälter nach einer Ausführungsform, dessen Innenraum durch drei Trennwände 3a, 3b und 3c in vier Kammern K₁, K₂, L₁ und L₂ unterteilt wird. Die Kammern K₁ und K₂, die im Folgenden als Kühlmittelkammer bezeichneten werden, weisen dabei jeweils einen Einlass 1a, 2a und einen Auslass 1b, 2b auf, über die die beiden Kühlmittelkammern K₁, K₂ mittels entsprechender Vorlauf- und Rücklaufleitungen, z. B. Rohr- oder Schlauchverbindungen, mit Kühlkreisläufen (nicht dargestellt) in Verbindung stehen. Für ihre ordnungsgemäße Funktion können die Kühlkreisläufe dabei an sich bekannte Komponenten umfassen, darunter Kühlmittel, Kühlmittelpumpen, Kühlmittelkühler, Wärmetauscher, von Kühlmittel umströmte Komponenten sowie weitere Fluidleitungen. Vorzugsweise weisen die beiden Kühlkreisläufe dabei eine unterschiedliche Betriebstemperatur im Normalbetrieb auf. So besitzt der, der ersten Kühlmittelkammer K₁ zugeordnete, Kühlkreis ein niedrigeres Kühlmitteltemperaturniveau als der Kühlkreis, der mit der zweiten Kühlmittelkammer K₂ in Verbindung steht. Im Normalbetrieb sind die beiden Kühlmittelkammern K₁ und K₂ zum Teil mit Kühlmittel 10 gefüllt, wobei der in Figur 1 beispielhaft dargestellte Kühlmittelfüllstand etwa 85 % des jeweiligen Kühlmittelkammervolumens beträgt und durch eine Füllstandsonde 9 sensiert wird. Das restliche Volumen der Kühlmittelkammern K₁ und K₂ ist hierbei mit Luft 20 gefüllt, wobei der Begriff Luft 20 stellvertretend für alle Arten von im Kühlkreis vorhandene Gase und/oder Dämpfe verstanden wird. Als Kühlmittel 10, kann dabei jedes für den Wärmetransport geeignete Medium verstanden werden, welches zumindest teilweise im flüssigen Zustand durch die Kühlkreisläufe und Kühlmittelkammern K₁, K₂ zirkuliert. Vorzugsweise handelt es sich bei dem Kühlmittel 10 um ein Wasser-Kühlwasser-Additiv-Gemisch.

Die, die erste und zweite Kühlmittelkammern K₁ und K₂ trennende, wärmeisolierende Trennwand 3a ist nicht durchgängig ausgebildet, sondern besitzt zwei kleine Durchlassöffnungen 4a und 4b. Die erste Durchlassöffnung 4a befindet sich dabei in Bodennähe des Ausgleichsbehälters 100, d. h. unterhalb des minimal zulässigen Füllstands mit Kühlmittel 10, und ermöglicht einen Austausch von Kühlmittel 10 sowie darin gelöster Stoffe z. B. Additive zum Korrosionsschutz. Um einen übermäßigen Wärmeaustausch zu verhindern, ist die Durchlassöffnung 4a dabei vorteilhafterweise in einer strömungsberuhigten Region angeordnet. Die zweite Durchlassöffnung 4b befindet sich in knapp unterhalb der Behälterdecke und damit in einem Bereich oberhalb des maximal zulässigen Füllstands mit Kühlmittel 10. Diese zweite Durchlassöffnung 4b ermöglicht einen Austausch von Luft 20 und damit auch einen Druckausgleich zwischen den beiden Kühlmittelkammern K₁ und K₂. Mit anderen Worten liegt somit in der ersten und zweiten Kühlmittelkammer K₁ und K₂ derselbe Luftdruck in den mit Luft 20 gefüllten Bereichen sowie derselbe Kühlmitteldruck in den mit Kühlmittel 10 gefüllten Bereichen des Ausgleichsbehälters 100 vor. Darüber hinaus umfasst der Ausgleichsbehälter 100 eine Einfüllöffnung 7a für Kühlmittel 10 mit einem entsprechenden Deckel 7b. Die Einfüllöffnung 7a ist dabei in der Behälterdecke im Bereich der Trennwand 3a angeordnet. Auf vorteilhafte Weise lassen sich so beide Kühlmittelkammern K₁ und K₂ gleichzeitig mit Kühlmittel befüllen.

Zusätzlich zu den beiden Kühlmittelkammern K₁ und K₂ umfasst der Ausgleichsbehälter 100 eine erste kleine Luftkammer L₁, die durch die Behälterwände (inkl. Deckel und Boden) und den Trennwänden 3b und 3c gebildet wird. Diese Luftkammer L₁ steht über eine erste Überströmverbindung 5a mit der zweiten Kühlmittelkammer K₂ in Verbindung. Beispielhaft ist die Luftkammer L₁ neben und in Verbindung mit der Kühlmittelkammer K₂ dargestellt. Dabei umfasst im vorliegenden Beispiel die erste Überströmverbindung eine Öffnung in der Trennwand 3b knapp unterhalb der Behälterdecke sowie einen durch die Trennwand 3b und einer weiteren ersten Wandung 51 geformten Kanal. Die Überströmverbindung 5a mündet in einem unteren Bereich, d. h. in Bodennähe des Ausgleichsbehälters 100, in die erste Luftkammer L₁. An diese erste Luftkammer L₁ schließt sich eine weitere zweite große Luftkammer L₂ an, deren Volumen durch die Behälterwände (inkl. Deckel und Boden) und den Trennwänden 3c begrenzt wird und die ein größeres Volumen, als die erste Luftkammer L₁ besitzt. Die Verbindung zwischen der ersten und zweiten Luftkammer erfolgt hierbei über ein im oberen Bereich der Trennwand 6a angeordnetes erstes Druckventil 6a sowie eine dran anschließende zweite Überströmverbindung 5b. Ähnlich zur ersten Überströmverbindung 5a wird auch in diesem Fall die zweite Überströmverbindung 5b durch eine Trennwand 3c und eine weitere zweite Wandung 52 geformt und endet in einem unteren Bereich, d. h. in Bodennähe des Ausgleichsbehälters 100, in die zweite Luftkammer L₂. Das erste Druckventil 6a öffnet dabei einerseits bei einem Überdruck von 0.4 bar der ersten Luftkammer L₁ relativ zum Druck in der zweiten Luftkammer L₂ und andererseits bei einem Unterdruck der von 0.03 mbar der ersten Luftkammer L₁ relativ zum Druck in der zweiten Luftkammer L₂. Zudem umfasst die zweite Luftkammer L₂ ein zweites Druckventil 6b, über das Luft ab einem Überdruck von 0.5 bar in der zweiten Luftkammer L₂ relativ zum Außendruck in den Außenraum entweichen kann und vom Außenraum in die zweite Luftkammer eintreten kann, falls in der zweiten Luftkammer ein Unterdruck von 0.03 mbar relativ zum Druck im Außenraum vorliegt.

Im Folgenden wird nun die Wirkungsweise der Druckaddition der beiden Luftkammern L₁ und L₂ unter Bezugnahme auf Figur 1 näher beschrieben, wobei sich im Anfangszustand keiner der Kühlkreisläufe in Betrieb befinden soll. In allen vier Kammern liegt ein Luftdruck von 0 bar relativ zum Außendruck vor und die Kühlmittelkammern K₁ und K₂ sind mit Kühlmittel 10 bis zum in Figur 1 gezeigten Füllstand gefüllt. Werden die Kühlkreisläufe nun in Betrieb genommen, so beginnt sich das Kühlmittel 10 in den beiden Kühlkreisläufen zu erwärmen. Infolge der damit einhergehenden Expansion des Kühlmittels 10 wird dieses in den Ausgleichsbehälter 100 gedrückt und verdrängt bzw. komprimiert das dort vorhandene Luftvolumen. Dieses setzt sich dabei aus dem kleinen Luftvolumen oberhalb des anfänglichen Kühlmittelfüllstands in den Kühlmittelkammern K₁, K₂ und dem kleinen Luftvolumen der ersten Luftkammer L₁ zusammen.

**Infolge dieses** relativ geringen Luftvolumens erfolgt so auf vorteilhafte Weise ein schneller Druckaufbau in beiden Kühlkreisläufen bis zu einem Überdruck von 0.4 bar relativ zur zweiten Luftkammer L₂ bzw. Außendruck, da sich die zweiten Luftkammer L₂ noch auf einen Druck von 0 bar relativ zum Außendruck befindet. Im Zuge dieses Druckaufbaus kann auch Kühlmittel 10 über die Überströmverbindung 5a in die erste Luftkammer L₁ gedrückt werden. Der Vorteil der Anordnung ist dabei, dass aufgrund der luftseitigen Kopplung über die Durchlassöffnung 4b auch im Kühlkreislauf mit niedrigem Temperaturniveau bereits kurz nach Inbetriebnahme ein Kavitation und Aufkochen des Kühlmittels verhindernder Überdruck erzeugt wird, der sich ansonsten aufgrund des niedrigeren Temperaturniveaus des Kühlkreislaufs deutlich langsamer einstellen würde.

Bei einer weiteren Erwärmung der Kühlkreisläufe und der damit einhergehenden Expansion des Kühlmittels 10 in den Kühlkreisläufen erfolgt ein weiterer Druckaufbau im System, wobei dieser nun langsamer erfolgt, da ab einem Überdruck von 0.4 bar relativ zur zweiten Luftkammer L₂ auch deren Volumen über das Druckventil 6a zur Verfügung steht. Entsprechend findet im weiteren Verlauf ein Druckaufbau sowohl in der ersten als auch zweiten Luftkammer statt, wobei der Druck in der ersten Luftkammer L₁ immer 0.4 bar über dem der zweiten Luftkammer L₂ liegt.

Dieser Anstieg erfolgt solange bis in der zweiten Luftkammer L2 ein Überdruck von 0.5 bar im Vergleich zum Außenraum erreicht wird. Ab diesem Zeitpunkt entweicht Luft aus dem Ausgleichsbehälter in den Außenraum und zum Schutz der Bauteile findet kein weiterer Druckaufbau statt. Der Vorteil des zweistufigen Druckaufbaus mittels den beiden Luftkammern L₁ und L₂ liegt darin, dass im Falle eines zwischenzeitlichen Druckabfalls infolge transient schwankender Kühlmitteltemperaturen erneut ein schneller Druckaufbau erfolgen kann, da erneut nur das geringe Volumen der ersten Luftkammer L₁ anstelle des gesamten Luftvolumens des Ausgleichsbehälters 100 komprimiert werden muss.

Der Vorteil der zweiten Luftkammer L₂ anstelle eines direkten Auslasses in den Außenraum durch ein Druckventil mit entsprechend erhöhtem Öffnungsdruck liegt darin, dass die zweite Luftkammer L₂ so dimensioniert werden kann, dass diese auch bei maximaler Kühlmitteltemperatur die komplette expandierende Kühlmittelmenge aufzunehmen kann. Dadurch wird ein Verlust bzw. Auswurf von Kühlmittel 10 im Betrieb vermieden.

Komprimiert sich bei dem in Figur 1 dargestellten Ausgleichsbehälter 100 nach Betriebsende das Kühlmittel 10 aufgrund der sinkenden Kühlmitteltemperatur, so entsteht in den Luftkammern L₁ und L₂ ein Unterdruck, der eventuell in den Luftkammern vorhandenes Kühlmittel 10 über die Überströmverbindung 5a, 5b in die Kühlmittelkammern K₁ und K₂ zurückbefördert. Zudem findet im vorliegenden Beispiel ein Druckausgleich über die Druckventile 6a und 6b statt falls in der ersten Luftkammer L₁ ein Unterdruck von 0.03 mbar relativ zur zweiten Luftkammer L₂ bzw. falls in der zweiten Luftkammer L₂ ein Unterdruck von 0.03 mbar relativ zum Außendruck vorliegt.

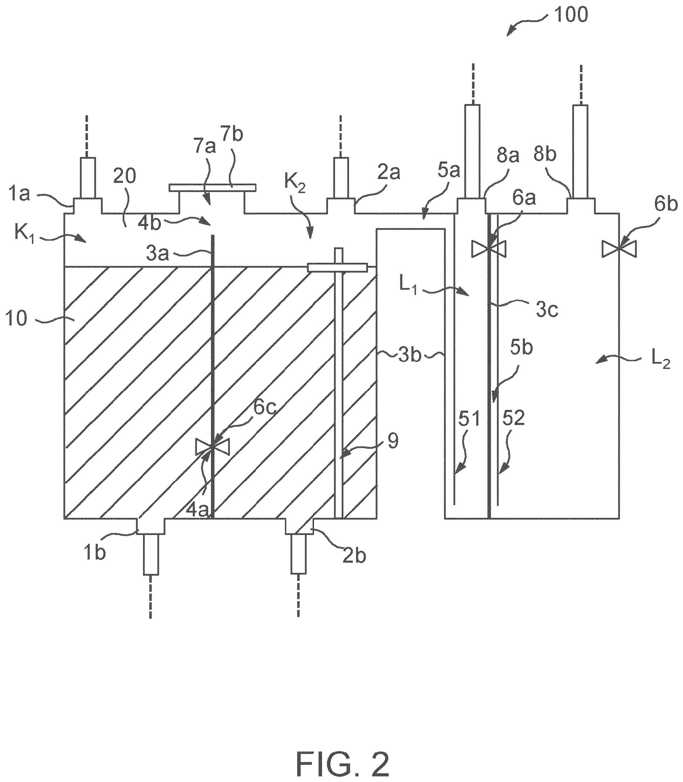

Figur 2 zeigt eine erfindungsgemäße Ausführungsform des Ausgleichsbehälters 100, welcher ebenfalls zwei Kühlmittelkammern K₁ und K₂ sowie zwei Luftkammern L₁ und L₂ umfasst. Im Gegensatz zum vorherigen Ausführungsbeispiel aus Figur 1 sind die Luftkammern L₁ und L₂ als von den Kühlmittelkammern K₁ und K₂ beabstandete Luftkammeranordnung ausgeführt, die über die erste Überströmverbindung 5a mit den Kühlmittelkammern K₁ und K₂ in Verbindung steht. Die Überströmverbindung 5a umfasst hierbei eine als Schlauch- und/oder Leitungsverbindung ausgeformte Öffnung in der Trennwand 3b knapp unterhalb der Behälterdecke sowie einen durch die Trennwand 3b und einer weiteren ersten Wandung 51 geformten Kanal. Im Unterschied zum Ausführungsbeispiel aus Figur 1 ist die erste Durchlassöffnung 4a in der die erste und zweite Kühlmittelkammer K₁, K₂ trennenden Trennwand 3a zwar unterhalb des minimal zulässigen Kühlmittelfüllstands allerdings nicht direkt in Bodennähe des Ausgleichsbehälters 100 angeordnet. Dies hat den Vorteil, dass im Fall einer Leckage in einem der Kühlkreisläufe ein komplettes Leerlaufen auch des anderen Kühlkreises verhindert wird. Zusätzlich umfasst die Durchlassöffnung 4a eine Absperreinrichtung 6c. Diese ist in Form eines Ventils ausgebildet und unterbricht im geschlossenen Zustand den Austausch von Kühlmittel 10 zwischen den beiden Kühlkreisläufen. Dadurch wird ein Wärmeübertrag zwischen den unterschiedlichen temperierten Kühlkreisläufen effektiv verhindert. Die aus den beiden Luftkammern L₁ und L₂ bestehenden Luftkammeranordnung weist zusätzlich zum Ausführungsbeispiel der Figur 1 einen Anschluss 8a für eine externe Druckbeaufschlagung sowie einen Anschluss 8b für eine externe Druckentlastung auf. Mittels der Druckbeaufschlagung ist es möglich bereits bei Inbetriebnahme der Kühlkreisläufe den Ausgleichsbehälter 100 mit einem Überdruck zu beaufschlagen, wodurch die ansonsten vorhandene Druckaufbauphase entfällt und/oder beschleunigt wird. Mittels der Druckentlastung kann ein im Kühlsystem auftretender ungewollter Überdruck, Druckstöße und/oder -pulsationen aus dem Kühlsystem abgeleitet werden, wodurch sie einen zusätzlichen Sicherungsmechanismus darstellt. Ferner umfasst der Ausgleichsbehälter eine in der zweiten Kühlmittelkammer angeordneten Füllstandsonde 9 zum Sensieren des Kühlmittelfüllstands.

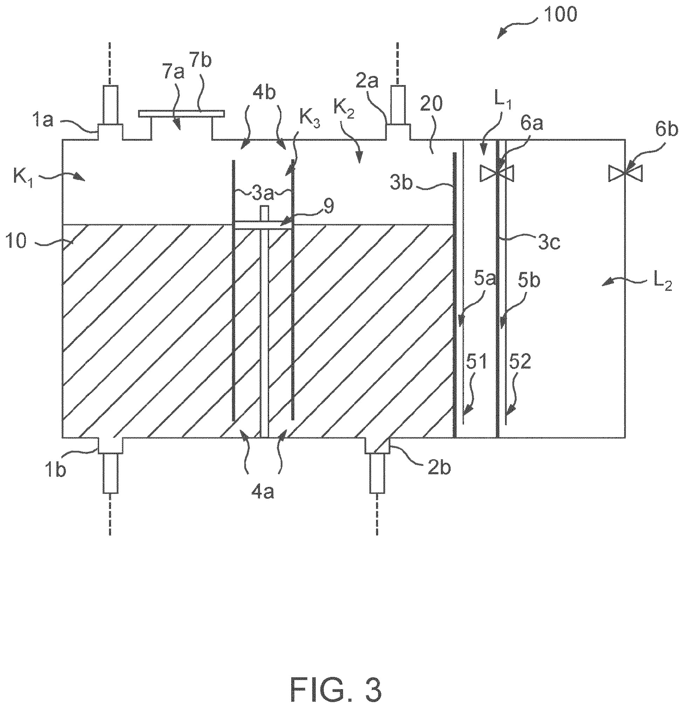

In der in Figur 3 dargestellten Ausführungsform (keine Ausführungsform der Erfindung) ist die, die erste und zweite Kühlmittelkammer K₁, K₂ trennende, Trennwand 3a in Form einer strömungsberuhigten dritten Kühlmittelkammer K₃ ausgebildet. Aufgrund des stark unterbundenen Austauschs von Kühlmittel 10 zwischen der ersten und zweiten Kühlkammer K₁, K₂ wird ein unerwünschter Wärmeübertrag zwischen den beiden unterschiedlich temperierten Kühlkreisläufen verhindert. Aufgrund der geringen Bewegungen des Kühlmittels 10 in der dritten Kammer eignet sich dieser Ort besonders für eine Füllstandmessung. Aus diesem Grund ist im gezeigten Ausführungsbeispiel in der dritten Kühlmittelkammer K₃ eine Füllstandsonde 9 angeordnet, die die Standhöhe des Kühlmittels in der dritten Kühlmittelkammer K₃ misst. Des Weiteren ist die Einfüllöffnung 7a nicht im Bereich der Trennwand angeordnet, sondern ausschließlich im Bereich der ersten Kühlmittelkammer. Aufgrund der durch die dritte Kühlmittelkammer K₃ durchgängigen ersten Durchlassöffnung 4a erfolgt allerdings beim Befüllen der ersten Kammer K₁ gleichzeitig ein Kühlmitteleintrag in die zweite und dritte Kammer K₂, K₃.

### Bezugszeichenliste

- K₁: Erste Kühlmittelkammer
- K₂: Zweite Kühlmittelkammer
- K₃: Dritte Kühlmittelkammer
- L₁: Erste Luftkammer
- L₂: Zweite Luftkammer
- 1a: Erster Einlass
- 1b: Erster Auslass
- 2a: Zweiter Einlass
- 2b: Zweiter Auslass
- 3a: Trennwand zwischen erster und zweiter Kühlmittelkammer
- 3b: Trennwand zwischen zweiter Kühlmittelkammer und erster Luftkammer
- 3c: Trennwand zwischen erster und zweiter Luftkammer
- 4a: Erste Durchlassöffnung
- 4b: Zweite Durchlassöffnung
- 5a: Erste Überströmverbindung
- 5b: Zweite Überströmverbindung
- 6a: Erstes Druckventil
- 6b: Zweites Druckventil
- 6c: Absperreinrichtung
- 7a: Einfüllöffnung
- 7b: Deckel der Einfüllöffnung
- 8a: Anschluss für externe Druckbeaufschlagung
- 8b: Anschluss für externe Druckentlastung
- 9: Füllstandsonde
- 10: Kühlmittel
- 20: Luft
- 51: Erste Wandung
- 52: Zweite Wandung
- 100: Ausgleichsbehälter

## Patentansprüche

1. Ausgleichsbehälter (100) für Kühlmittel (10) in einem Kühlsystem mit mindestens zwei Kühlkreisläufen, welche auf unterschiedlichen Temperaturniveaus betrieben werden, wobei ein Innenraum des Ausgleichsbehälters (100) durch Trennwände (3a, 3b, 3c) in getrennte Kammern (K₁, K₂, L₁, L₂) unterteilt ist, umfassend:
a) eine erste Kühlmittelkammer (K₁), aufweisend einen ersten Einlass (1a) und einen ersten Auslass (1b) zum Verbinden der ersten Kühlmittelkammer (K₁) mit einem ersten Kühlkreislauf,
b) eine zweite Kühlmittelkammer (K₂), aufweisend einen zweiten Einlass (2a) und einen zweiten Auslass (2b) zum Verbinden der zweiten Kühlmittelkammer (K₂) mit einem zweiten Kühlkreislauf,
c) eine erste Durchlassöffnung (4a) in einer die erste und zweite Kühlmittelkammer (K₁, K₂) trennenden Trennwand (3a), vorzugsweise in deren unteren Bereich, zur Ermöglichung eines Austauschs von Kühlmittel (10) zwischen der ersten und zweiten Kühlmittelkammer (K₁, K₂),
d) eine zweite Durchlassöffnung (4b) in einer die erste und zweite Kühlmittelkammer (K₁, K₂) trennenden Trennwand (3a), vorzugsweise in deren oberen Bereich, zur Ermöglichung eines Austauschs von Luft (20) zwischen der ersten und zweiten Kühlmittelkammer (K₁, K₂),
e) eine erste Luftkammer (L₁), die über eine erste Überströmverbindung (5a) mit der zweiten Kühlmittelkammer (K₂) in Verbindung steht,
f) eine zweite Luftkammer (L₂), die über eine zweite Überströmverbindung (5b) und ein daran angebrachtes erstes Druckventil (6a) mit der ersten Luftkammer (L₁) in Verbindung steht und über ein zweites Druckventil (6b) mit dem Außenraum in Verbindung steht, wobei
g) das zweite Druckventil (6b) auf einen relativen Öffnungsdruck ausgelegt ist, der einer Druckdifferenz zwischen einem relativen Öffnungsdruck des ersten Druckventils (6a) und einem vorbestimmten erhöhten relativen Öffnungsdruck entspricht, so dass sich eine Druckaddition zwischen deren relativen Öffnungsdrücken ergibt
wobei eine Luftkammeranordnung, umfassend die erste und zweite Luftkammer (L₁, L₂), beabstandet von der Kühlmittelkammeranordnung, umfassend die erste und zweite Kühlmittelkammer (K₁, K₂), als ein separater Behälterteil ausgeführt ist und über die erste Überströmverbindung (5a) mit der Kühlmittelkammeranordnung in Verbindung steht.

2. Ausgleichsbehälter (100) nach Anspruch 1, **dadurch gekennzeichnet, dass** die erste Durchlassöffnung (4a) in einer unteren Hälfte, vorzugsweise in einem unteren Drittel, der die erste und zweite Kühlmittelkammer (K₁, K₂) trennenden Trennwand (3a) und die zweite Durchlassöffnung (4b) in einer oberen Hälfe, vorzugsweise in einem oberen Drittel, der die erste und zweite Kühlmittelkammer (K₁, K₂) trennenden Trennwand (3a) angeordnet ist.

3. Ausgleichsbehälter (100) nach Anspruch 1 oder 2, **dadurch gekennzeichnet, dass** die erste Durchlassöffnung (4a) zusätzlich eine Absperreinrichtung (6c) zur Unterbrechung des Austauschs von Kühlmittel (10) zwischen der ersten und zweiten Kühlmittelkammer (K₁, K₂) umfasst, wobei die Absperreinrichtung (6c) als
a. Druckventil und/oder
b. Schwimmerventil und/oder
c. Thermostatventil und/oder
d. Absperrschieber oder Absperrklappe
ausgebildet ist.

4. Ausgleichsbehälter (100) nach Anspruch 1, **dadurch gekennzeichnet, dass** die die erste und zweite Kühlmittelkammer (K₁, K₂) trennende Trennwand (3a) in Form einer strömungsberuhigten dritten Kühlmittelkammer (K₃) ausgebildet ist und der Austausch von Kühlmittel (10) und Luft (20) zwischen der ersten und zweiten Kühlmittelkammer (K₁, K₂) über die dritte Kühlmittelkammer (K₃) erfolgt.

5. Ausgleichsbehälter (100) nach Anspruch 4, **dadurch gekennzeichnet, dass** die dritte Kühlmittelkammer (K₃)
a. ein oder mehrere Schwallwände zur Strömungsberuhigung und/oder
b. ein oder mehrere strömungsberuhigende Elemente und/oder
c. ein oder mehrere Füllstandsonden (9)
umfasst.

6. Ausgleichsbehälter (100) nach einem der vorherigen Ansprüche, **dadurch gekennzeichnet, dass** mindestens eine der Trennwände (3a, 3b, 3c), doppelwandig ausgebildet ist und einen thermisch isolierenden Luftspalt umfasst.

7. Ausgleichsbehälter (100) nach einem der vorherigen Ansprüche, **dadurch gekennzeichnet, dass** die erste und/oder zweite Luftkammer (L₁, L₂) einen Anschluss für eine externe
a) Druckbeaufschlagung (8a) und/oder
b) Druckentlastung (8b)
umfasst.

8. Ausgleichsbehälter (100) nach einem der vorherigen Ansprüche, **dadurch gekennzeichnet, dass** zum schnellen Druckaufbau die erste Luftkammer (L₁) ein kleineres Volumen als die zweite Luftkammer (L₂) umfasst.

9. Ausgleichsbehälter (100) nach einem der vorhergehenden Ansprüche, **dadurch gekennzeichnet, dass** der Ausgleichsbehälter (100)
a1) aus einem transparenten Material gefertigt ist oder
a2) aus einem nicht transparenten Material gefertigt ist und/oder
b1) ein Sichtfenster zur optischen Füllstandskontrolle umfasst und/oder
b2) ein oder mehrere Füllstandsonden (9) umfasst.

10. Ausgleichsbehälter (100) nach einem der vorhergehenden Ansprüche, **dadurch gekennzeichnet, dass**
a) der Einlass (1a, 2a) und/oder Auslass (1b, 2b) der ersten und/oder zweiten Kühlmittelkammer (K₁, K₂) als Schlauchstutzen oder Schlauchkupplung ausgeführt ist und/oder
b) der Ausgleichsbehälter (100) ein oder mehrere Silikatdepots zum Einbringen von Zusatzstoffen in das Kühlmittel (10) umfasst, welche vorzugsweise an der ersten und/oder zweiten Kühlmittelkammer (K₁, K₂) angeordnet sind und/oder
c) eine Einfüllöffnung (7a) für Kühlmittel 10 mit einem entsprechenden Deckel (7b) aufweist.

11. Ausgleichsbehälter (100) nach einem der vorherigen Ansprüche, **dadurch gekennzeichnet, dass** der Ausgleichsbehälter (100)
a. weitere zur ersten und zweiten Luftkammer (L₁, L₂) in Reihe geschaltete Luftkammern mit entsprechenden Überströmverbindungen und Druckventilen und/oder
b. weitere zur ersten und zweiten Kühlmittelkammer (K₁, K₂) parallel geschaltete Kühlmittelkammern mit entsprechenden Einlässen und Auslässen zum Verbinden mit weiteren Kühlkreisläufen
umfasst.

12. Kraftfahrzeug, vorzugsweise Nutzfahrzeug, und/oder stationäre Anlage mit einem Ausgleichsbehälter (100) nach einem der Ansprüche 1 bis 11.

## Claims

1. Compensation tank (100) for coolant (10) in a cooling system having at least two cooling circuits which are operated at different temperature levels, wherein an inner space of the compensation tank (100) is divided into separate chambers (K₁, K₂, L₁, L₂) by partition walls (3a, 3b, 3c), comprising:
a) a first coolant chamber (K₁) comprising a first inlet (1a) and a first outlet (1b) for connecting the first coolant chamber (K₁) to a first cooling circuit,
b) a second coolant chamber (K₂) comprising a second inlet (2a) and a second outlet (2b) for connecting the second coolant chamber (K₂) to a second cooling circuit,
c) a first passage opening (4a) in a partition wall (3a) separating the first and second coolant chambers (K₁, K₂), preferably in the lower region thereof, for enabling an exchange of coolant (10) between the first and second coolant chambers (K₁, K₂),
d) a second passage opening (4b) in a partition wall (3a) separating the first and second coolant chambers (K₁, K₂), preferably in the upper region thereof, for enabling an exchange of air (20) between the first and second coolant chambers (K₁, K₂),
e) a first air chamber (L₁), which communicates with the second coolant chamber (K₂) via a first overflow connection (5a),
f) a second air chamber (L₂), which communicates with the first air chamber (L₁) via a second overflow connection (5b) and a first pressure valve (6a) attached thereto and communicates with the external space via a second pressure valve (6b), wherein
g) the second pressure valve (6b) is configured for a relative opening pressure corresponding to a pressure difference between a relative opening pressure of the first pressure valve (6a) and a predetermined increased relative opening pressure, so that a pressure addition results between their relative opening pressures;
wherein an air chamber assembly, comprising the first and second air chambers (L₁, L₂), is arranged at a distance from the coolant chamber assembly, comprising the first and second coolant chambers (K₁, K₂), as a separate container part and is in communication with the coolant chamber assembly via the first overflow connection (5a).

2. Compensation tank (100) according to claim 1, **characterized in that** the first passage opening (4a) is arranged in a lower half, preferably in a lower third, of the partition wall (3a) separating the first and second coolant chambers (K₁, K₂), and the second passage opening (4b) is arranged in an upper half, preferably in an upper third, of the partition wall (3a) separating the first and second coolant chambers (K₁, K₂).

3. Compensation tank (100) according to claim 1 or 2, **characterized in that** the first passage opening (4a) further comprises a shut-off device (6c) for interrupting the exchange of coolant (10) between the first and second coolant chambers (K₁, K₂), wherein the shut-off device (6c) is configured as
a. pressure valve and/or
b. float valve and/or
c. thermostatic valve and/or
d. gate valve or butterfly valve.

4. Compensation tank (100) according to claim 1, **characterized in that** the partition wall (3a) separating the first and second coolant chambers (K₁, K₂) is configured as a flow-calmed third coolant chamber (K₃) and the exchange of coolant (10) and air (20) between the first and second coolant chambers (K₁, K₂) occurs via the third coolant chamber (K₃).

5. Compensation tank (100) according to claim 4, **characterized in that** the third coolant chamber (K₃) comprises
a. one or more baffles for flow-calming and/or
b. one or more flow-calming elements and/or
c. one or more filling level probes (9).

6. Compensation tank (100) according to any one of the preceding claims, **characterized in that** at least one of the partition walls (3a, 3b, 3c) is double-walled and comprises a thermally insulating air gap.

7. Compensation tank (100) according to any one of the preceding claims, **characterized in that** the first and/or second air chamber (L₁, L₂) has a connection for an external
a) pressurization (8a) and/or
b) pressure relief (8b).

8. Compensation tank (100) according to any one of the preceding claims, **characterized in that** for rapid pressure build-up, the first air chamber (L₁) comprises a smaller volume than the second air chamber (L₂).

9. Compensation tank (100) according to any one of the preceding claims, **characterized in that** the compensation tank (100) is
a1) is made of a transparent material or
a2) is made of a non-transparent material and/or
b1) comprises a viewing window for optical filling level control and/or
b2) comprises one or more filling level probes (9).

10. Compensation tank (100) according to any one of the preceding claims, **characterized in that** a) the inlet (1a, 2a) and/or outlet (1b, 2b) of the first and/or second coolant chamber (K₁, K₂) is configured as a hose nozzle or hose coupling and/or
b) the compensation tank (100) comprises one or more silicate depots for introducing additives into the coolant (10), which are preferably arranged at the first and/or second coolant chamber (K₁, K₂) and/or
c) has a filling opening (7a) for coolant (10) with a corresponding cover (7b).

11. Compensation tank (100) according to any one of the preceding claims, wherein the compensation tank (100) comprises
a. further air chambers connected in series with the first and second air chambers (L₁, L₂) and having corresponding overflow connections and pressure valves and/or
b. further coolant chambers connected in parallel with the first and second coolant chambers (K₁, K₂) and having corresponding inlets and outlets for connecting to further cooling circuits.

12. Motor vehicle, preferably commercial vehicle, and/or stationary installation having a compensation tank (100) according to any one of claims 1 to 11.

## Revendications

1. Réservoir de compensation (100) destiné à un agent de refroidissement (10) dans un système de refroidissement comprenant au moins deux circuits de refroidissement qui fonctionnent sur des niveaux de température différents, un espace intérieur du réservoir de compensation (100) étant divisé en chambres séparées (K₁, K₂, L₁, L₂) par des parois de séparation (3a, 3b, 3c), ledit réservoir de compensation comprenant :
a) une première chambre d'agent de refroidissement (K₁) comportant une première entrée (1a) et une première sortie (1b) destinées à relier la première chambre d'agent de refroidissement (K₁) à un premier circuit de refroidissement,
b) une deuxième chambre d'agent de refroidissement (K₂) comportant une deuxième entrée (2a) et une deuxième sortie (2b) destinées à relier la deuxième chambre d'agent de refroidissement (K₂) à un deuxième circuit de refroidissement,
c) une première ouverture de passage (4a) ménagée dans une paroi de séparation (3a) qui sépare les première et deuxième chambres d'agent de refroidissement (K₁, K₂), de préférence dans la région inférieure de celle-ci, pour permettre un échange d'agent de refroidissement (10) entre les première et deuxième chambres d'agent de refroidissement (K₁, K₂),
d) une deuxième ouverture de passage (4b) ménagée dans une paroi de séparation (3a) qui sépare les première et deuxième chambres d'agent de refroidissement (K₁, K₂), de préférence dans la région supérieure de celle-ci, pour permettre un échange d'air (20) entre les première et deuxième chambres d'agent de refroidissement (K₁, K₂),
e) une première chambre d'air (L₁) qui est reliée à la deuxième chambre d'agent de refroidissement (K₂) par le biais d'une première liaison de trop-plein (5a),
f) une deuxième chambre d'air (L₂) qui est reliée à la première chambre d'air (L₁) par le biais d'une deuxième liaison de trop-plein (5b) et d'une première soupape de pression (6a) fixée à celle-ci et qui est reliée à l'espace extérieur par le biais d'une deuxième soupape de pression (6b),
g) la deuxième soupape de pression (6b) étant conçue pour une pression d'ouverture relative qui correspond à une différence de pression entre une pression d'ouverture relative de la première soupape de pression (6a) et une pression d'ouverture relative accrue prédéterminée de sorte qu'il résulte une addition de pression entre leurs pressions d'ouverture relatives ;
un ensemble de chambres d'air, qui comprend les première et deuxième chambres d'air (L₁, L₂), étant espacée de la disposition de chambre de fluide de refroidissement, comprenant la première et la deuxième chambre de fluide de refroidissement (K1, K2), est réalisée comme une partie de réservoir séparée et est en communication avec la disposition de chambre de fluide de refroidissement par l'intermédiaire de la première connexion de surverse (5a).

2. Réservoir de compensation (100) selon la revendication 1, **caractérisé en ce que** la première ouverture de passage (4a) étant ménagée dans une moitié inférieure, de préférence dans un tiers inférieur, de la paroi de séparation (3a) qui sépare les première et deuxième chambres d'agent de refroidissement (K₁, K₂) et la deuxième ouverture de passage (4b) étant ménagée dans une moitié supérieure, de préférence dans un tiers supérieur, de la paroi de séparation (3a) qui sépare les première et deuxième chambres d'agent de refroidissement (K₁, K₂).

3. Réservoir de compensation (100) selon la revendication 1 ou 2, **caractérisé en ce que** la première ouverture de passage (4a) comprenant en outre un dispositif d'arrêt (6c) destiné à interrompre l'échange d'agent de refroidissement (10) entre les première et deuxième chambres d'agent de refroidissement (K₁, K₂), le dispositif d'arrêt (6c) étant conçu comme
a. une soupape de pression et/ou
b. une soupape à flotteur et/ou
c. une soupape thermostatique et/ou
d. une vanne d'arrêt ou un clapet d'arrêt.

4. Réservoir de compensation (100) selon la revendication 1, **caractérisé en ce que** la paroi de séparation (3a) qui sépare les première et deuxième chambres d'agent de refroidissement (K₁, K₂) étant conçue sous la forme d'une troisième chambre d'agent de refroidissement (K₃) à écoulement tranquillisé et l'échange d'agent de refroidissement (10) et d'air (20) entre les première et deuxième chambres de refroidissement (K₁, K₂) s'effectuant par le biais de la troisième chambre de refroidissement (K₃).

5. Réservoir de compensation (100) selon la revendication 4, **caractérisé en ce que** la troisième chambre d'agent de refroidissement (K₃) comprenant
a. une ou plusieurs parois d'amortissement destinées à tranquilliser l'écoulement et/ou
b. un ou plusieurs éléments de tranquillisation d'écoulement et/ou
c. un ou plusieurs capteurs de niveau de remplissage (9).

6. Réservoir de compensation (100) selon l'une des revendications précédentes, **caractérisé en ce que** au moins une des parois de séparation (3a, 3b, 3c) étant double et comprenant un espace d'air thermiquement isolant.

7. Réservoir de compensation (100) selon l'une des revendications précédentes, **caractérisé en ce que** la première et/ou la deuxième chambre d'air (L₁, L₂) comprenant un raccord destiné à
a) une mise sous pression extérieure (8a) et/ou
b) une décompression extérieure (8b).

8. Réservoir de compensation (100) selon l'une des revendications précédentes, **caractérisé en ce que** la première chambre à air (L₁) ayant un volume inférieur à celui de la deuxième chambre à air (L₂) afin d'établir rapidement une pression.

9. Réservoir de compensation (100) selon l'une des revendications précédentes, **caractérisé en ce que** le réservoir de compensation (100)
a1) étant en une matière transparente ou
a2) étant en une matière non transparente et/ou
b1) comprenant une fenêtre de visualisation destinée au contrôle optique du niveau de remplissage et/ou
b2) comprenant un ou plusieurs capteurs de niveau de remplissage (9).

10. Réservoir de compensation (100) selon l'une des revendications précédentes, **caractérisé en ce que**
a) l'entrée (1a, 2a) et/ou la sortie (1b, 2b) de la première et/ou de la deuxième chambre d'agent de refroidissement (K₁, K₂) étant conçues sous la forme d'un raccord de tuyau ou d'un accouplement de tuyau et/ou
b) le réservoir de compensation (100) comprenant un ou plusieurs dépôts de silicate qui sont destinés à introduire des additifs dans l'agent de refroidissement (10) et qui sont disposés de préférence au niveau de la première et/ou de la deuxième chambre d'agent de refroidissement (K₁, K₂) et/ou
c) comprenant une ouverture de remplissage (7a) destinée à l'agent de refroidissement 10 et comprenant un couvercle correspondant (7b).

11. Réservoir de compensation (100) selon l'une des revendications précédentes, **caractérisé en ce que** le réservoir de compensation (100) comprenant
a. d'autres chambres d'air montées en série avec les première et deuxième chambres d'air (L₁, L₂) et comprenant des liaisons de trop-plein et des soupapes de pression correspondantes et/ou
b. d'autres chambres d'agent de refroidissement montées en parallèle avec les première et deuxième chambres de refroidissement (K₁, K₂) et comprenant des entrées et sorties correspondantes destinées à être reliées à d'autres circuits de refroidissement.

12. Véhicule automobile, de préférence véhicule utilitaire, et/ou installation stationnaire comprenant un réservoir de compensation (100) selon l'une des revendications 1 à 11.
